# EUROPÄISCHE PATENTSCHRIFT

(11) **EP 2 944 194 B1**
(45) Veröffentlichungstag und Bekanntmachung des Hinweises auf die Patenterteilung: **25.01.2017**
(21) Anmeldenummer: 15450022.7
(22) Anmeldetag: 12.05.2015
(51) Int. Cl.: A01N 25/12, A01N 25/18, A01N 25/30, A01N 37/02, A01N 63/00

(54) **VERFAHREN ZUM AUSFÜHREN DER VERWIRRMETHODE**
METHOD FOR IMPLEMENTING MATING DISRUPTION
PROCÉDÉ D'EXÉCUTION DE MÉTHODES DE CONFUSION DES MÂLES

(30) Priorität: 15.05.2014 AT 3592014
(43) Veröffentlichungstag der Anmeldung: 18.11.2015
(73) Patentinhaber: Witasek, Peter, 9560 Feldkirchen (AT)
(72) Erfinder: Witasek, Peter, 9560 Feldkirchen (AT)
(74) Vertreter: Beer & Partner Patentanwälte KG

(56) Entgegenhaltungen:
- EP-A2- 0 281 918
- WO-A2-2011/091450
- DE-A1- 3 708 297

## Beschreibung

Die Erfindung betrifft ein Verfahren zum Ausführen der Verwirrmethode.

Die Verwirrmethode oder Paarungsstörung (auch Verwirrungsverfahren, Konfusionsverfahren oder Verwirrungstechnik genannt) ist eine Methode zum Bekämpfen von Schadensinsekten in der Landwirtschaft, ohne Nützlinge zu gefährden.

Dabei nutzt man das Verhalten einiger Insekten bei der Paarung aus. Die weiblichen Tiere verströmen Pheromone (Sexualpheromone oder Botenstoffe), um männliche Tiere anzulocken. Bringt man in einem zu schützenden Gebiet eine höhere Stoffkonzentration (insbesondere eine deutlich überhöhte Konzentration) künstlich hergestellter Pheromone aus, so werden die männlichen Tiere orientierungslos und finden nicht mehr zum Weibchen. Dadurch wird die Vermehrung dieses Schädlings behindert. Die Verwirrmethode ist artspezifisch, da jede Art von Schädlingen ein eigenes, artspezifisches Pheromon oder eine artspezifische Mischung aus Pheromonen hat.

Im Stand der Technik werden Pheromone in Dispensern ausgebracht. Dies sind flüssigkeitsgefüllte, braune, weiße oder transparente Kunststoffampullen, die auf den Feldern und Anbauflächen an Pflanzen, wenn möglich, im Schatten angebracht werden.

Eine weitere Form des Ausbringens von Pheromonen sind sogenannte Spaghetti-Dispenser, bei dem die Pheromone im Kunststoff des Dispensers selbst eingearbeitet sind. Die Spaghetti-Dispenser werden wie ein Stück Draht an Pflanzen angebunden.

Beim Anwenden von Pheromondispensern aus Kunststoff werden diese an den Pflanzen oder an Befestigungen aufgehängt. Dabei ergeben sich hohe Arbeitskosten. Überdies ist es nachteilig, dass die Pheromonwirkung kleinflächig konzentriert und über das Gebiet, in dem Pheromone auszubringen sind, also der zu schützenden Fläche, nicht gleichmäßig ist und durch die Applikation eine nur geringe Menge an Pheromon ausgebracht wird.

Es wurden auch Versuche mit einer Sprühmethode gemacht, bei der das Pheromon in kleinen Kunststoffkugeln (Kunststoff-Nanopartikel) enthalten ist.

Erfolgreich angewendet wird die Verwirrmethode bisher unter anderem beim Einbindigen Traubenwickler (Eupoecilia ambiguella), beim Bekreuzten Traubenwickler (Lobesia botrana), beim Apfelwickler (Cydia pomonella) und beim Maiszünsler (Ostrinia nubilalis).

Die Verwirrmethode gilt als ökologisch, da durch den Einsatz der Pheromone die Menge an chemischen Insektiziden verringert werden kann. Positiver Nebeneffekt ist die Förderung der Populationsdynamik von Nützlingen.

Die Lockwirkung von Sexualpheromonen (Botenstoffen) und das Paarungsverhalten von Insekten werden im Verfahren der Verwirrmethode (mating disruption) ausgenutzt, um Kulturen (Landwirtschaft, Weinbau, etc.) vor Schadinsekten zu schützen. Dabei wird das artspezifische Pheromon, das Weibchen zum Anlocken der Männchen einsetzen, in einer deutlich überhöhten Konzentration auf der zu schützenden Fläche ausgebracht.

In der Folge verlieren die männlichen Tiere die Orientierung und können die Weibchen nicht mehr finden. Dadurch wird die Vermehrung der Schadinsekten gestört.

Dieses Prinzip wird im Stand der Technik bereits angewendet.
So ist aus der WO 99/44420 A (EP 1 064 843 B1) ein Verfahren zum Herstellen von Trägern auf Basis von Zeolithen und anderen anorganischen Molekularsieben für die kontrollierte Abgabe von Semiochemikalien bekannt. Die mit Semiochemikalien beladenen Träger sollen zum Bekämpfen von landwirtschaftlichen Schädlingen verwendet werden. Die Träger sollen in Form von Tabletten, Granulaten, Konglomeraten oder Pulvern angewendet werden.

Die WO 2011/091450 A2 (= AT 508 914 B1) betrifft ein Verfahren zum Herstellen eines mit einem Pheromon imprägnierten Granulates zum Schutz von Maiskulturen gegen den Maiswurzelbohrer. Das Granulat soll sowohl für Insektenfallen als auch für die Verwirrmethode (= Konfusionsverfahren) gegen Borkenkäfer anwendbar sein. Das Zeolithgranulat der WO 2011/091450 A2 soll mit Hilfe herkömmlicher Streugeräte auf ein Maisfeld aufgebracht werden.

Die GB 2 067 406 A betrifft eine Zubereitung, die auf einem Träger niedergeschlagene Pheromone enthält. Um das Freisetzen des Pheromons zu regeln ("linear and total but fast release", Seite 2, Zeile 15 der GB 2 067 406 A) ist eine Beschichtung aus Kunstharz und einem Adhäsionsmittel und weiteren Bestandteilen vorgesehen. Die Zubereitung der GB 2 067 406 A soll auf übliche Art und Weise (GB 2 067 406 A, Seite 2, Zeile 43/44 und Seite 1, Zeile 39/40), z.B. durch Sprühen, angebracht werden.

Die EP 1 064 843 A1 befasst sich insbesondere mit dem Ändern der Eigenschaften von Zeolith, damit dieser als Träger für Semiochemikalien geeignet ist. Irgendwelche Hinweise auf das Verwenden der gemäß EP 1 064 843 A1 erhaltenen Produkte zum Ausführen der Verwirrmethode einerseits und auf die Verwendung von Netz- und Haftmitteln andererseits sind in der EP 1 064 843 A1 nicht enthalten.

Die bekannten Verfahren haben allerdings den Nachteil, dass beträchtliche Mengen an Hilfsstoffen eingesetzt werden müssen, was zu einer Reduzierung der PheromonWirkung führen kann.

Der Erfindung liegt die Aufgabe zu Grunde, ein Verfahren zur Verfügung zu stellen, mit dem Sexualpheromone mit größerer Wirksamkeit als bisher ausgebracht werden können, wenn die Verwirrmethode angewendet wird.

Gelöst wird diese Aufgabe erfindungsgemäß mit einem Verfahren, welches die Merkmale von Anspruch 1 aufweist.

Dank des erfindungsgemäßen Verfahrens wird die Wirkung der Pheromone verbessert und insbesondere verlängert.

Bevorzugte und vorteilhafte Ausführungsformen des erfindungsgemäßen Verfahrens sind Gegenstand der Unteransprüche.

Bei dem erfindungsgemäßen Verfahren werden artspezifische Pheromone, die auf einem Träger niedergeschlagen sind, in Kombination mit einem Netzmittel ausgebracht.

Das erfindungsgemäße Verfahren bietet gegenüber der GB 2 067 406 A erhebliche Vorteile. Anders als bei der GB 2 067 406 A ist es bei dem erfindungsgemäßen Verfahren nicht erforderlich, mehrere Trägerstoffe zu verwenden. Weiters ist es bei der Erfindung im Unterschied zur GB 2 067 406 A nicht nötig, weitere Stoffe zuzuführen, damit die für eine erfolgreiche Anwendung erforderlichen Eigenschaften erreicht werden.

Ein Vorteil des erfindungsgemäßen Verfahrens, das für das Ausführen der Verwirrmethode bezüglich aller auf Sexualwirkung ansprechende Schadinsekten geeignet ist, besteht darin, dass gemeinsam mit dem mit Pheromon beladenen Träger (insbesondere Zeolith) auch andere Stoffe, z. B. Fungizide, ausgebracht werden können.

Bei der GB 2 067 406 A sind das Netzmittel und das Haftmittel Bestandteil der mit Harz beschichteten Trägerteilchen, die auch ein Pheromon enthalten. So ist das Verhältnis der Bestandteile vorgegeben, da alle Bestandteile auf Trägerteilchen niedergeschlagen vorliegen.

Bei dem erfindungsgemäßen Verfahren hingegen kann das Mengenverhältnis Träger mit Pheromonen zu Netz- und Haftmitteln an den jeweiligen Anwendungsfall angepasst gewählt werden.

Insbesondere liegt bei der Erfindung der Träger mit dem auf ihn niedergeschlagenen Pheromon als Formulierung vor. Um die Wirksamkeit zu verbessern, wird zusätzlich ein Netz- und Haftmittel aufgebracht, z.B. versprüht.

Beispielsweise ist die Formulierung ein wasserlösliches Granulat.

Beim Ausführen des erfindungsgemäßen Verfahrens können herkömmliche Sprühgeräte, z. B. solche, die im Weinbau verwendet werden, eingesetzt werden.

Beim Ausführen des erfindungsgemäßen Verfahrens können (lösliche) Granulate verwendet werden, die 10 bis 50 g. Pheromon je kg Träger, insbesondere 20 bis 40 g/kg, enthalten.

Beispielsweise werden je Hektar 1 bis 15 g, insbesondere 5 bis 10 g Pheromon, ausgebracht.

Insbesondere können in dem erfindungsgemäßen Mittel die nachstehend genannten Pheromone (Sexualpheromone oder Botenstoffe) enthalten sein:
(E,Z)-7.9-Dodecadienylacetat gegen den einbindigen Traubenwickler (Lobesia botrana).
(Z)-9-Dodecenylacetat gegen den bekreuzten Traubenwickler (Eupoecilia ambiguella).

Als Träger für das Pheromon kann beispielsweise Zeolith (ein Silikat-Mineral) verwendet werden.

Durch das Verfahren der Erfindung ergibt sich ein Ausbringeverfahren, das Nachteile vermeidet, die sich aus der bisherigen Anwendung ergeben. Dabei ist das Pheromon in Zeolith eingearbeitet und dort bis zur Ausgabe auf der Fläche gespeichert.

Die flüssigkeitsspeichernde Eigenschaft von Zeolith wird ausgenützt, so dass das Pheromon erst bei Erreichen bestimmter Temperaturen wieder an die Umgebung abgegeben wird.

Zeolith kann verschiedene Kornrößen aufweisen (Pulverbis Granulatform) und das Einarbeiten des Pheromon in Zeolith kann quantitativ gesteuert werden (ca. 10 - 50 g pro kg Zeolith).

Der so mit Pheromon beladene Träger, vorzugsweise gesättigter Zeolith, wird gleichmäßig auf der Fläche ausgebracht, indem das Mittel beim Ausführen des erfindungsgemäßen Verfahrens in einer Mischung mit Wasser durch Sprühen, beispielsweise mit üblichen, agrarwirtschaftlichen Geräten, ausgebracht wird.

Bei einer Applikation des Mittels der Erfindung im Spritzverfahren ist es auch vorteilhaft, dass die Mischung mit anderen Spritzmitteln versetzt werden kann, ohne dass die Wirkung der Pheromone beeinflusst wird.

Bei dem Verfahren der Erfindung wird der in Mischung mit Wasser vorliegende Träger, auf dem ein Pheromon niedergeschlagen ist, gemeinsam und gleichzeitig mit einem Netz- und Haftmittel ausgebracht. Dies erlaubt es, sowohl die absoluten Mengen der Komponenten (Pheromon auf einem Träger einerseits und Netz- und Haftmittel andererseits), die je Flächeneinheit ausgebracht werden, als auch die Relativverhältnisse der Komponenten zueinander je nach Bedarf zu wählen.

Bei dem erfindungsgemäßen Verfahren werden beim Ausführen der Verwirrmethode gleichzeitig zwei Komponenten eingesetzt, nämlich
a) der mit Pheromon beladene Träger als Mischung mit Wasser und
b) das Netz- und Haftmittel.

Die Komponenten a) und b) werden erfindungsgemäß durch Sprühen (auf die Pflanzen) ausgebracht,
Der Umstand, dass bei der Erfindung zwei Komponenten, nämlich die Komponente a) und die Komponente b), verwendet werden, erlaubt es, deren Mengen und insbesondere deren Verhältnisse zueinander zu ändern. So ergeben sich dank des Verfahrens der Erfindung deutliche Arbeits- und Kostenersparnisse.

Die Anwendung erfolgt flächig und gleichmäßig in einer sehr hohen Konzentration. Das Pheromon wird vom Träger (Zeolith) über eine bestimmte Zeitperiode im wesentlichen gleichmäßig abgegeben, wodurch die Wirkung für die Verwirrmethode und damit der Schutz der Kultur gesichert ist.

Bei der Erfindung wird gemeinsam mit dem Mittel, das gemischt mit Wasser ausgebracht (versprüht) werden kann, ein Netz- und Haftmittel verwendet, das auch verhindert, dass auf Pflanzen nach dem Aufsprühen des Mittels eine manchmal unerwünschte, weiße Färbung entsteht.

Als Netz- und Haftmittel kann beispielsweise ein Mittel verwendet werden, das oberflächenaktive Substanzen, ggf. mit weiteren Hilfsstoffen, beispielsweise Dioctyl-Natrium-Sulfosuccinat, Polyethylenglykol-octylphenyläther und Isopropanol, enthält. Beispiele sind die unter der Bezeichnung Exzellent CS-7 von der Fattinger GmbH und Zellex CS von der Cheminova Austria GmbH & Co KG, Graz auf den Markt gebrachten Mittel.

Anwendungsmöglichkeiten für das Verfahren der Erfindung sind u.a. Einbinder Traubenwickler (Eupoecilia ambiguella), Bekreuzter Traubenwickler (Lobesia botrana), wo z. B. 10 g Pheromon pro kg Zeolith und pro Hektar angewendet werden und der Maiswurzelbohrer (Diabrotica virgifera), wo ca. 20 ml Pheromon pro 4 kg Zeolith und Hektar angewendet werden.

Das Gemenge aus Träger (Zeolith) und Pheromon kann auf an sich bekannte Art und Weise, z. B. nach dem aus der WO 2011/091450 A2 bekannten Verfahren, hergestellt werden.

Nachstehend werden Ausführungsbeispiele und Ergebnisse des erfindungsgemäßen Verfahrens wiedergegeben.

Die Versuche wurden an Weinpflanzen (Furmint (80 %) und Harselevelii (20%)) in der Gegend von Miskolc (Ungarn) ausgeführt.

Z 74/1/2013 Bekämpfung des bekreuzten Traubenwicklers (Lobesia botrana) und des einbindigen Traubenwicklers (Eupoecilia ambiguella) an Weinstöcken mit der Sexualpheromon-Luft-Verwirrungstechnik
1. Versuch-Nummer: Z 74/1/2013
2. Name des Herstellers: Witasek PflanzenSchutz GmbH
3. Der Versuch wurde durchgeführt von:
Direktorat für Pflanzenschutz- und Bodenschutz des Regierungsbüros des Komitats BAZ
Abteilung für Schädlingsdiagnose, Miskolc

4. Ziel des Versuchs: Bekämpfung des bekreuzten Traubenwicklers (Lobesia botrana) und des einbindigen Traubenwicklers (Eupoecilia ambiguella) an Weinstöcken mit der Sexualpheromon-Luft-Verwirrungstechnik
5. Details der Produkte:

| Behandlung Nr. | Behandlung | | Produktdosis | Dosiseinheit |
|---|---|---|---|---|
| | Produktname | behandelte Fläche | | |
| 1. | Unbehandelt | - | - | - |
| 2. | Isonet L Plus Standardkontrolle | 1,0 ha | 500 | Stücke/ ha |
| 3. | WITA, Variante A Lobewit+Eupoewit | 0,9 ha | 250+250 | g/ha |
| 4. | WITA, Variante B Lobewit+Eupoewit + Zellex CS | 1,2 ha | 250+250 0,1 | g/ha % |
| 5. | WITA, Variante C Lobewit+Eupoewit + Zellex CS | 1,8 ha | 1.000+1.000 0,1 | g/ha % |

6. Name des Produkts: Wita (Lobewit+Eupoewit)
7. Wirkstoff des Produkts: Pheromone von Lobesia botrana und Eupoecilia ambiguella
8. Produktmenge: ausführlich in Punkt 5 dargelegt
9. Sprühvolumen (1/ha): 500 1/ha durch die Behandlungen Nr. 3, 4, 5
10. Name des Schädlings: Bekreuzter Traubenwickler und einbindiger Traubenwickler
11. Lateinischer Name des Schädlings: Lobesia botrana und Eupoecilia ambiguella
12. Name der Feldfrucht: Weinstock
13. Lateinischer Name der Feldfrucht: Vitis vinifera
14. Sorte: Furmint (80 %); Härslevelü (20%)
15. Vorfrucht: -
16. Pflanzendichte (Pflanze/ha): 2740
17. Art der Bepflanzung: Anpflanzung/Bewirtschaftung
18. Anpflanzungsbeginn, Datum: 16/09/1988
19. Reihen- und Pflanzenabstand (mxm): 2,7 x 1,35
20. Anbausystem: mittelhohes Spalier
21. Ort des Versuchs: Mád, Danska-Weinberg, privater Weinberg der Herren Istvän Szepsi und Kormos György, topographische Nr.: Mád 0178/3, 15-19, 23-25, Mád 017-9/5-7, 15-20, Mád 0198/23-24, Mád 0199/1-4, 25.
22. Bodentyp: Lösslehm
23. Qualität der Bodenvorbereitung: -
24. Düngemitteleinsatz (*a.i. kg*/*ha*): -, N:-, P:-, K:-
25. Dünger (*t*/*ha*): *-* (*Jahr*): -
26. Größe der Versuchsparzellen (*ha*):

| | | |
|---|---|---|
| 1. | Unbehandelte Kontrolle | 1,3 ha |
| 2. | Isonet L, Standardkontrolle | 1,0 ha |
| 3. | WITA, Variante A | 0,9 ha |
| 4. | WITA, Variante B | 1,2 ha |
| 5. | WITA, Variante C | 1,8 ha |

27. Anlage: randomisierte Blockanlage
28. Anzahl der Wiederholungen: keine Wiederholungen
29. Datum der Behandlungen: 17/06/2013
30. Art der Behandlung: Behandlung in bebauten Parzellen;
Anwendungsmodus: Blattbesprühung
31. Zerstäubertyp: Dragon Athos-1500 Zerstäuber
32. Düsentyp: keramische Hohlkegeldüse
33. Düsengröße: Albuz 1.2
34. Druck (*bar*) : 15
35. Arbeitsgeschwindigkeit (*km*/*h*)*:* 6-8
36. Flughöhe (m): -
37. Einarbeitungswerkzeug: -
38. Einarbeitungstiefe: (cm):-
39. Zubereitbarkeit und Anwendbarkeit des Produkts: gut
40. Pflanzenschutzmaßnahmen, die vor und nach der Behandlung durchgeführt wurden:

| | | | |
|---|---|---|---|
| 7-8/06/2013 | Antracol 2 kg/ha | 600 | Fungizid-behandlung |
| | Falcon 0,3 1/ha | Wasservolumen/ha | |
| 22/06/2013 | Antracol 2 kg/ha | 600 1 | Fungizid-behandlung |
| | Falcon 0,3 1/ha | Wasservolumen/ha | |
| 09/07/2013 | Montaflow 2 1/ha | 600 1 | Fungizidbehandlung |
| | Microken 3 kg/ha | Wasservolumen/ha | |
| | Flint Max 0,3 kg/ha | | |
| 27/07/2013 | Montaflow 2 1/ha | 600 1 | Fungizid-behandlung |
| | Microken 3 kg/ha | Wasservolumen/ha | |
| | Falcon 0,3 1/ha | | |

41. Phänologischer Zustand der Feldfrucht während der Behandlung(en) und der Bewertung(en):

| | | | |
|---|---|---|---|
| Bei der Behandlung | 17/06 | Beginn des Traubenansatzes | BBCH 77 |
| Bei der 1. Bewertung | 14/08 | Trauben werden weich, Reifebeginn | BBCH 81 |
| Bei der 2. Bewertung | 19/09 | Erntereife Trauben | BBCH 89 |

42. Entwicklungszustand des Schädlings während der Behandlung (en) und der Bewertung (en) :

| | | |
|---|---|---|
| Während der Behandlung | 17/06 | Entwickelte Larven, Puppen |
| Bei der 1. Bewertung | 14/08 | Entwickelte Larven, Puppen |
| Bei der 2. Bewertung | 19/09 | Entwickelte Larven, Puppen |

43. Verfahren für die, und Ergebnisse der Untersuchung des ersten Befalls durch den Schädling/Schwärmaktivität des Schädlings:
Die Schwärmaktivität der 2. Generation begann ab dem 20. Juni. Im Danszka-Weinberg, Mád, wurde eine mittlere Schwärmintensität festgestellt und auf den unbehandelten Parzellen entwickelte sich ein mittlerer Larvenbefall. Die Schwärmaktivität der 3. Generation begann ab dem 30. Juli; auf den unbehandelten Parzellen entwickelte sich ein geringes Niveau an Larvenbefall.
Etwa 99 % der ausgewachsenen Wickler gehörten zur Spezies Lobesia botrana und es wurden nur wenige Eupoecilia ambiguella gefunden.
Hilfsmittel, Art der Untersuchung der Flugaktivität: Pheromonfalle, geliefert von der Firma Witasek PflanzenSchutz GmbH, Typ "Lobesia and Eupoecilia"
Wetterbedingungen bei der Behandlung: 17/06/2013
44. Temperatur (°C); Bedeckungsgrad: 18,3-22,8; 20-25%
45. relative Feuchtigkeit (%): 52,2-74,9
46. Windgeschwindigkeit (m/Sek.), Windrichtung: 0,2-0,7; S, SW
47. Bodentemperatur bei der Behandlung: Es war keine Maßnahme erforderlich.
48. Bodenfeuchtigkeit bei der Behandlung (%): Es war keine Maßnahme erforderlich.
49. Niederschlag (falls aufgetreten) 24 Stunden nach der Behandlung (mm): 0 mm
50. Temperatur während des Versuchszeitraums (tägliche Maximal-, Minimaltemp., Mittelwerte): Ausführliche Angaben finden sich in Anhang 1.
51. Niederschlag während des Versuchszeitraums (täglich, mm): Ausführliche Angaben finden sich in Anhang 1.
52. Extreme Bedingungen mit Einfluss auf die Wirksamkeit der Formulierung während der Behandlung und während des Versuchszeitraums: Das Wetter war sehr viel heißer als normal; im August war nur eine kleine Menge an Niederschlag gefallen; die Population der Eier und der Larven der 3. Generation wurden negativ beeinflusst.
53. Bewässerung: -, Modus: -, Daten: -, Volumen (mm) :-
54. Verfahren zur Evaluierung der biologischen Wirksamkeit:
Die Evaluierung der Wirksamkeit der Luft-Verwirrungstechnik mit Sexualpheromon wurde mit dem Tierbekämpfungsverfahren Versuch Nr.: 2.2.5.9.4. und gemäß dem Protokoll der EPPO-Richtlinie PP 1/264(1) durchgeführt, wobei die Anzahl der befallenen Stöcke und die Anzahl der geschädigten Trauben auf den befallenen Stöcken, in 10 x 10 Trauben pro Parzelle am Ende des Schädigungszeitraums der 2. und 3. Generation gezählt wurde; Berechnung der Wirksamkeit in % gemäß der Abbott-Formel.
Die Anzahl der vorhandenen Eupoecilia ambiguella, reichte für eine Bewertung nicht aus.
Die Anzahl der gefangenen Männchen wurde wöchentlich in Pheromonfallen gezählt. Das Ergebnis findet sich in Tabelle 5.

55. Verfahren zur Evaluierung der Phytotoxizität (mit dem Tierbekämpfungsverfahren Versuch Nr.:
2.1.3.4.): Beobachtung von 2 x 50 Trieben je Parzelle auf den Blättern und der Feldfrucht, zwei Mal.

56. Verfahren zur Evaluierung der Nebenwirkungen auf die nützlichen lebenden Organismen (mit dem Tierbekämpfungsverfahren Versuch Nr.: 2.1.3.5.): Für eine Evaluierung reichte die vorhandene Anzahl nicht aus.
57. Ergebnisse des Versuchs zur biologischen Wirksamkeit:

| Behandlung | Wirksamkeit in % auf die 2. Generation von Lobesia botrana mittels der | | Wirksamkeit in % auf die 3. Generation von Lobesia botrana mittels der | |
|---|---|---|---|---|
| | Anzahl an befallenen Trauben von 10 x 10 Stöcken | Gesamtanzahl der geschädigten Trauben auf den befallenen Stöcken | Anzahl an befallenen Trauben von 10 x 10 Stöcken | Gesamtanzahl der geschädigten Trauben auf den befallenen Stöcken |
| 1. Unbehandelte Kontrolle | - | - | - | - |
| 2. Isonet L Plus Standardkontrolle | 86,49 | 81, 97 | 80,00 | 73, 91 |
| 3. WITA, Variante A 250+250 g/ha Lobewit+Eupoewit | 62,16 | 59,23 | 65,00 | 60,87 |
| 4. WITA, Variante B 250+250 g/ha Lobewit+Eupoewit + 0,1% Zellex CS | 72,07 | 63,09 | 65,00 | 56,52 |
| WITA, Variante C 1.000+1.000 g/ha Lobewit+Eupoewit + 0,1% Zellex CS | 81,98 | 82,83 | 75,00 | 69,57 |

Im Fall der 2. Generation, unter Berücksichtigung der Anzahl der befallenen Trauben aus 10 x 10 Stöcken und der Gesamtanzahl der geschädigten Trauben auf den befallenen Stöcken, erbrachte die A Variation des Wita-Produkts eine schwächere Wirkung, die B Variation des Wita-Produkts ergab eine etwas schwächere Wirkung als der Standard Isonet LPlus; während die C Variation des Wita-Produkts eine ähnlich gute Wirkung wie der Standard erbrachte.
Angesichts der geringen Anzahl von Larven der 3. Generation in den unbehandelten Parzellen bei der 2. Bewertung konnte die Wirkung nicht zuverlässig evaluiert werden.

58. Ergebnisse des Phytotoxizitätstests: Es wurde keine Phytotoxizität festgestellt.
59. Ergebnisse des Tests zu den Nebenwirkungen auf die nützlichen lebenden Organismen: -
60. Beobachtungen zu anderen Eigenschaften der Formulierung (mit dem Tierbekämpfungsverfahren Versuch Nr. 2.1.3.6.): -
61. Schlussfolgerungen, Vorschläge:
Die Behandlungsvarianten A, B und C des WITA-Produkts werden für einen weiteren Kontrollversuch an Traubenwicklern (Lobesia botrana und Eupoecilia ambiguella) bei Weinstöcken empfohlen.

62. Anhang:
1) Tabelle 1: Wirkung der Behandlungsvarianten des Wita-Produkts auf die Larven der 2. Generation des bekreuzten Traubenwicklers (Lobesia botrana) bei Weinstöcken mit Blattbehandlung
2) Tabelle 2: Ergebnis der Einweg-Varianzanalyse der Wirkung der Behandlungsvarianten des Wita-Produkts auf die Larven der 2. Generation des bekreuzten Traubenwicklers (Lobesia botrana)
3) Tabelle 3: Wirkung der Behandlungsvarianten des Wita-Produkts auf die Larven der 3. Generation des bekreuzten Traubenwicklers (Lobesia botrana) bei Weinreben mit Blattbehandlung
4) Tabelle 4 : Ergebnis der Einweg-Varianzanalyse der Wirkung der Behandlungsvarianten des Wita-Produkts auf die Larven der 3. Generation des bekreuzten Traubenwicklers (Lobesia botrana)
5) Tabelle 5: Anzahl der in den Pheromonfallen gefangenen Männchen des bekreuzten Traubenwicklers (Lobesia botrana) und des einbindigen Traubenwicklers (Eupoecilia ambiguella)
6) Anhang 1: Meteorologische Daten
7) Anhang 2: Geografischer Lageplan des Versuchs in Mád, Komitat BAZ, Ungarn, 2013
8) Anhang 3: GEP-Zertifikat

**Tabelle 1:**

| Wirkung der Behandlungsvarianten A, B und C des Wita-Produkts auf die Larven der 2. Generation des bekreuzten Traubenwicklers (Lobesia botrana) bei Weinreben mit Blattbehandlung Mád, 2013 | | | | | | |
|---|---|---|---|---|---|---|
| | | | Feldfrucht: Weinrebe | | | |
| Datum der Behandlung: 17/06/2013 | | | | | | |
| Datum der Bewertung: 14/08/2013 | | | | | | |
| BEHANDLUNG | Wiederholung | A | B | Wirksamkeit in % | | |
| | Durchschnitt | Anzahl der befallenen Trauben aus 10 x 10 Stöcken gegen die zweite Generation am 58. Tag nach der Behandlung (Stück) | Gesamtanzahl der geschädigten Trauben auf den befallenen Stöcken am 58. Tag nach der Behandlung (Stück) | A | B | |
| 1. | 1 | 2,3,3,5,2,0,3,3,0,4 | 25 | 54 | | |
| Unbehandelte Kontrolle | 2 | 4,5,3,3,0,2,4,4,0,3 | 28 | 58 | | |
| | 3 | 3,4,5,5,0,2,4,3,2,3 | 31 | 65 | | |
| | 4 | 3,4,3,5,5,2,0,3,0,2 | 27 | 56 | | |
| | Durchschnitt | | 27,75 | 58,25 | - | - |
| 2. | 1 | 0,0,0,1,0,0,2,0,0,0 | 3 | 10 | | |
| Isonet L Plus | 2 | 0,0,0,0,1,1,1,0,1,0 | 4 | 12 | | |
| Standardkontrolle | 3 | 0,1,0,0,1,0,0,1,1,0 | 4 | 9 | | |
| | 4 | 0,0,0,2,0,1,0,0,1,0 | 4 | 11 | | |
| | Durchschnitt | | 3,75 | 10,50 | 86,49 | 81,97 |
| 3. WITA, Variante A | 1 | 0,1,3,0,0,0,3,0,3,0 | 10 | 20 | | |
| 250+250 g/ha | 2 | 0,0,3,2,3,0,0,2,0,1 | 11 | 23 | | |
| Lobewit+Eupoewit | 3 | 0,2,3,0,2,0,2,0,1,0 | 10 | 24 | | |
| | 4 | 0,0,3,1,0,0,3,0,2,2 | 11 | 28 | | |
| | Durchschnitt | | 10,50 | 23,75 | 62,16 | 59,23 |
| 4. | 1 | 0,0,2,3,1,0,0,2,1,0 | 7 | 18 | | |
| WITA, Variante B | 2 | 0,0,1,3,0,0,2,2,0,1 | 9 | 23 | | |
| 250+250 g/ha | 3 | 0,0,1,3,0,2,1,0,0,1 | 8 | 16 | | |
| Lobewit+Eupoewit | 4 | 0,0,2,2,0,0,0,0,2,1 | 7 | 19 | | |
| + 0,1% Zellex CS | Durchschnitt | | 7,75 | 21,50 | 72,07 | 63,09 |
| 5. | 1 | 0,0,0,0,0,0,0,0,0,0 | 0 | 0 | | |
| WITA, Variante C | 2 | 0,0,2,0,3,1,1,0,1,0 | 8 | 06 | | |
| 1000+1000 g/ha | 3 | 0,1,0,0,1,2,0,1,1,3 | 7 | 14 | | |
| Lobewit+Eupoewit | 4 | 0,0,2,0,0,1,1,0,1,0 | 5 | 10 | | |
| + 0,1% Zellex CS | Durchschnitt | | 5,00 | 10,00 | 81,98 | 82,83 |
| Standardabweichung (SD) 10 % | | | 9,0 | 9,3 | | |
| Standardabweichung (SD) 5 % | | | 11,0 | 11,3 | | |
| Standardabweichung (SD) 1 % | | | 15,2 | 15,6 | | |
| Variationskoeffizient (CV) % | | | 18,5 | 17,9 | | |
| F-Test | | | P 1% | P 1% | | |

**Tabelle 2:**

| Ergebnis der Koeffizienten-Varianzanalyse der Wirkung der Behandlungsvarianten des Wita-Produkts gegen die Larven der 2. Generation | | | | | | | |
|---|---|---|---|---|---|---|---|
| | | | | | | | |

| Anzahl der befallenen Trauben aus 10 x 10 Stöcken gegen die zweite Generation am 58. Tag nach der Behandlung (Stück) | | | | | | | |
|---|---|---|---|---|---|---|---|
| | | | | | | | |

| Berechnung der Standardabweichung | | | | | | | |
|---|---|---|---|---|---|---|---|
| Faktoren | SQ | FG | MQ | F-Wert | | P= | SZD-Wert |
| | | | | Berechn. | Tabelle | | |
| Alle | 1580,95 | | | | | | |
| Wiederholung | 0 | 0 | | | 2,36143 | 1,75305 | 2,50488 |
| Behandlung | 1519,7 | 4 | 379,925 | 93,0429 | 3,05557 | 2,13145 | 3,04556 |
| Fehler | 61,25 | 15 | 4,08333 | | 4,89321 | 2,94671 | 4,21047 |
| F-Test: P1% signifikant | | | | | | | |
| | | | | | | | |

| SQ Fehlerquadratsumme, FG: Freiheitsgrade, MQ: Varianz, P%: Fehlerwahrscheinlichkeit, F-Wert: Varianz der Gruppenmittelwerte/Mittelwerte der gruppeninternen Varianzen, SZD: signifikanter Unterschied | | | | | | | |
|---|---|---|---|---|---|---|---|
| | | | | | | | |

| Gesamtanzahl der geschädigten Trauben auf den befallenen Stöcken am 58. Tag nach der Behandlung (Stück) | | | | | | | |
|---|---|---|---|---|---|---|---|
| Berechnung der Standardabweichung | | | | | | | |
| Faktoren | SQ | FG | MQ | F-Wert | | P= | SZD-Wert |
| | | | | Berechn. | Tabelle | | |
| Alle | 6588,2 | | | | | | |
| Wiederholung | 0 | 0 | | | 2,36143 | 1,75305 | 5,39852 |
| Behandlung | 6303,7 | 4 | 1575,93 | 83,0892 | 3,05557 | 2,13145 | 6,5638 |
| Fehler | 284,5 | 15 | 18,9667 | | 4,89321 | 2,94671 | 9,07441 |

| | | | | | | | |
|---|---|---|---|---|---|---|---|
| F-Test: P1% signifikant SQ Fehlerquadratsumme, FG: Freiheitsgrade, MQ: Varianz, P%: Fehlerwahrscheinlichkeit, F-Wert: Varianz der Gruppenmittelwerte/Mittelwerte der gruppeninternen Varianzen, SZD: signifikanter Unterschied | | | | | | | |

**Tabelle 3:**

| Wirkung der Behandlungsvarianten A, B und C des Wita-Produkts auf die Larven der dritten Generation des bekreuzten Traubenwicklers (Lobesia botrana) bei Weinreben mit Blattbehandlung Mád, 2013 | | | | | | |
|---|---|---|---|---|---|---|
| | | | | Feldfrucht: Weinrebe | | |
| Datum der Behandlung: 17/06/2013 | | | | | | |
| Datum der Bewertung: 19/09/2013 | | | | | | |
| BEHANDLUNG | Wiederholung Durchschnitt | A | | B | Wirksamkeit in % | |
| | | Anzahl der befallenenTrauben aus 10 x 10 Stöcken gegen die zweite Generation am 94. Tag nach der Behandlung (Stück) | | Gesamtanzahl dergeschädigten Trauben auf den befallenen Stöcken am 94. Tag nach der Behandlung (Stück) | A | B |
| 1. Unbehandelte Kontrolle | 1 | 2,0,0,1,0,0,1,0,0,1 | 5 | 5 | | |
| | 2 | 2,1,0,0,0,2,0,0,0,1 | 6 | 7 | | |
| | 3 | 1,1,1,0,0,2,0,0,0,0 | 5 | 5 | | |
| | 4 | 0,1,0,0,0,0,1,0,0,2 | 4 | 6 | | |
| | Durchschnitt | | 5, 00 | 5,75 | - | - |
| 2. Isonet L Plus Standardkontrolle | 1 | 0,0,0,1,0,0,0,0,0,0 | 1 | 2 | | |
| | 2 | 0,0,0,0,1,1,0,0,0,0 | 2 | 2 | | |
| | 3 | 0,1,0,0,0,0,0,0,0,0 | 1 | 2 | | |
| | 4 | 0,0,0,0,0,0,0,0,0,0 | 0 | 0 | | |
| | Durchschnitt | | 1,00 | 1,50 | 80,00 | 73, 91 |
| 3. WITA, Variante A 250+250 g/ha Lobewit+Eupoewit | 1 | 0,1,0,0,0,0,0,0,1,0 | 2 | 2 | | |
| | 2 | 0,0,1,0,0,0,0,0,0,1 | 2 | 3 | | |
| | 3 | 0,0,0,0,0,0,0,0,1,0 | 1 | 2 | | |
| | 4 | 0,0,0,1,0,0,0,0,0,1 | 2 | 2 | | |
| | Durchschnitt | | 1,75 | 2,25 | 65,00 | 60, 87 |
| 4. WITA, Variante B 250+250 g/ha Lobewit+Eupoewit + 0,1% Zellex CS | 1 | 0,0,0,0,1,0,0,0,1,0 | 2 | 3 | | |
| | 2 | 0,0,1,0,0,0,0,0,0,1 | 1 | 2 | | |
| | 3 | 0,0,1,1,0,0,0,0,0,1 | 3 | 3 | | |
| | 4 | 0,0,0,0,0,0,0,0,0,1 | 1 | 3 | | |
| | Durchschnitt | | 1,75 | 2,50 | 65,00 | 56,62 |
| 5. WITA, Variante C 1.000+1.000 g/ha Lobewit+Eupoewit + 0,1% Zellex CS | 1 | 0,0,0,0,0,0,0,0,0,0 | 0 | 0 | | |
| | 2 | 0,0,0,0,0,1,1,0,0,0 | 2 | 2 | | |
| | 3 | 0,1,0,0,1,0,0,1,0,0 | 2 | 3 | | |
| | 4 | 0,0,0,0,0,1,0,0,0,0 | 1 | 2 | | |
| | Durchschnitt | | 1,25 | 1,75 | 75,00 | 69,57 |
| Standardabweichung (SD) 10 % | | | 20,5 | 19,3 | | |
| Standardabweichung (SD) 5 % | | | 24,9 | 23,4 | | |
| Standardabweichung (SD) 1 % | | | 34,4 | 32,4 | | |
| Variationskoeffizient (CV) % | | | 38,4 | 31,9 | | |
| F-Test | | | P 1% | P 1% | | |

**Tabelle 4:**

| Ergebnis der Koeffizienten-Varianzanalyse der Wirkung der Behandlungsvarianten des Wita-Produkts gegen die Larven der 3. Generation, (Mäd) - Ungarn 2013 | | | | | | | |
|---|---|---|---|---|---|---|---|
| | | | | | | | |

| Anzahl der befallenen Trauben aus 10 x 10 Stöcken gegen die zweite Generation am 94. Tag nach der Behandlung (Stück) | | | | | | | |
|---|---|---|---|---|---|---|---|
| Berechnung der Standardabweichung | | | | | | | |
| Faktoren | SQ | FG | MQ | F-Wert | | P= | SZD-Wert |
| | | | | Berechn. | Tabelle | | |
| Alle | 52,55 | | | | | | |
| Wiederholung | 0 | 0 | | | 2,361433 | 1,75305 | 1,024698 |
| Behandlung | 42,3 | 4 | 10,575 | 15,47561 | 3,055568 | 2,13145 | 1,24588 |
| Fehler | 10,25 | 15 | 0,683333 | | 4,89321 | 2,946713 | 1,72242 |

| SQ Fehlerquadratsumme, FG: Freiheitsgrade, MQ: Varianz, P%: Fehlerwahrscheinlichkeit, F-Wert: Varianz der Gruppenmittelwerte/Mittelwerte der gruppeninternen Varianzen, SZD: signifikanter Unterschied | | | | | | | |
|---|---|---|---|---|---|---|---|
| | | | | | | | |
| Gesamtanzahl der geschädigten Trauben auf den befallenen Stöcken am 94. Tag nach der Behandlung (Stück) | | | | | | | |
| | | | | | | | |
| Berechnung der Standardabweichung | | | | | | | |
| Faktoren | SQ | FG | MQ | F-Wert | | P= | SZD-Wert |
| | | | | Berechn. | Tabelle | | |
| Alle | 59,2 | | | | | | |
| Wiederholung | 0 | 0 | | | 2,361433 | 1,75305 | 1,108726 |
| Behandlung | 47,2 | 4 | 11,8 | 14,75 | 3,055568 | 2,13145 | 1,348047 |
| Fehler | 12 | 15 | 0,8 | | 4,89321 | 2,946713 | 1,863665 |

| | | | | | | | |
|---|---|---|---|---|---|---|---|
| F-Test: P1% signifikant F-Test: P 1% signifikant SQ Fehlerquadratsumme, FG: Freiheitsgrade, MQ: Varianz, P%: Fehlerwahrscheinlichkeit, F-Wert: Varianz der Gruppenmittelwerte/Mittelwerte der gruppeninternen Varianzen, SZD: signifikanter Unterschied | | | | | | | |

**Tabelle 5:**

| Datum der Überprüfung | Anzahl der mit den Pheromonfallen gefangenen männlichen Traubenwickler pro Behandlung (Stück) | | | | | | | |
|---|---|---|---|---|---|---|---|---|
| | Unbehandelt | | Wita A | | Wita B | | Wita C | |
| | Lobesia botrana | Eupoecilia ambiguella | Lobesia botrana | Eupoecilia ambiguella | Lobesia botrana | Eupoecilia ambiguella | Lobesia botrana | Eupoecilia ambiguella |
| 24/06/2013 | 32 | 0 | 15 | 0 | 30 | 0 | 25 | 0 |
| 02/07/2013 | 63 | 0 | 33 | 0 | 66 | 0 | 45 | 0 |
| 09/07/2013 | 98 | 0 | 44 | 0 | 86 | 0 | 68 | 0 |
| 16/07/2013 | 105 | 1 | 46 | 0 | 89 | 1 | 73 | 3 |
| 22/07/2013 | 108 | 0 | 47 | 0 | 78 | 0 | 75 | 0 |
| 30/07/2013 | 2 | 0 | 0 | 0 | 1 | 0 | 0 | 0 |
| 09/08/2013 | 15 | 0 | 1 | 0 | 7 | 0 | 1 | 0 |
| 14/08/2013 | 57 | 0 | 13 | 0 | 46 | 0 | 55 | 0 |
| 27/08/2013 | 62 | 0 | 71 | 0 | 86 | 0 | 106 | 0 |
| 28/08/2013 | 38 | 0 | 49 | 0 | 21 | 0 | 53 | 0 |
| 06/09/2013 | 5 | 0 | 3 | 0 | 3 | 0 | 7 | 0 |
| 19/09/2013 | 2 | 0 | 1 | 0 | 1 | 0 | 2 | 0 |

### Anhang 1

### Meteorologische Daten Miskolc, 2013

| Datum | Minimaltemp. (°C) | Maximaltemp. (°C) | Durchschnittstemp. (°C) | Niederschlag (mm) |
|---|---|---|---|---|
| 01/06 | 8 | 19 | 13,5 | 0,25 |
| 02/06 | 10 | 19 | 14,5 | 1,00 |
| 03/06 | 12 | 20 | 16,0 | 4,00 |
| 04/06 | 12 | 19 | 15,5 | 3,00 |
| 05/06 | 13 | 18 | 15,5 | 7,00 |
| 06/06 | 14 | 21 | 17,5 | 2,00 |
| 07/06 | 14 | 21 | 17,5 | 11,00 |
| 08/06 | 16 | 25 | 20,5 | 0,00 |
| 09/06 | 14 | 25 | 19,5 | 0,00 |
| 10/06 | 17 | 27 | 22,0 | 0,25 |
| 11/06 | 14 | 26 | 20,0 | 6,00 |
| 12/06 | 13 | 24 | 18,5 | 0,00 |
| 13/06 | 15 | 21 | 18,0 | 0,00 |
| 14/06 | 15 | 25 | 20,0 | 0,00 |
| 15/06 | 17 | 28 | 22,5 | 0,00 |
| 16/06 | 17 | 29 | 23,0 | 0,00 |
| 17/06 | 16 | 30 | 23,0 | 0,25 |
| 18/06 | 19 | 31 | 25,0 | 0,00 |
| 19/06 | 21 | 33 | 27,0 | 0,00 |
| 20/06 | 20 | 31 | 25,5 | 0,00 |
| 21/06 | 22 | 32 | 27,0 | 0,00 |
| 22/06 | 21 | 33 | 27,0 | 0,00 |
| 23/06 | 18 | 31 | 24,5 | 0,25 |
| 24/06 | 16 | 27 | 21,5 | 14,00 |
| 25/06 | 14 | 27 | 20,5 | 49,00 |
| 26/06 | 13 | 20 | 16,5 | 0,25 |
| 27/06 | 12 | 16 | 14,0 | 33,00 |
| 28/06 | 13 | 19 | 16,0 | 0,00 |
| 29/06 | 14 | 22 | 18,0 | 1,00 |
| 30/06 | 13 | 22 | 17,5 | 0,25 |

| Datum | Mindesttemp. (°C) | Maximaltemp. (°C) | Durchschnittstemp. (°C) | Präzipitation (mm) |
|---|---|---|---|---|
| 01/07 | 12 | 24 | 18,0 | 2.00 |
| 02/07 | 11 | 23 | 17,0 | 0,00 |
| 03/07 | 12 | 25 | 18,5 | 0,00 |
| 04/07 | 14 | 29 | 21,5 | 0,00 |
| 05/07 | 16 | 30 | 23,0 | 0,00 |
| 06/07 | 18 | 28 | 23,0 | 0,25 |
| 07/07 | 19 | 31 | 25,0 | 0,00 |
| 08/07 | 18 | 29 | 23,5 | 0,00 |
| 09/07 | 16 | 29 | 22,5 | 0,00 |
| 10/07 | 16 | 29 | 22,5 | 0,00 |
| 11/07 | 17 | 30 | 23,5 | 0,00 |
| 12/07 | 12 | keine Daten | 12,0 | 18,00 |
| 13/07 | 11 | 25 | 18.0 | 0,00 |
| 14/07 | 13 | 25 | 19,0 | 10.00 |
| 15/07 | 14 | 25 | 19,5 | 0,25 |
| 16/07 | 12 | 23 | 17,5 | 3,00 |
| 17/07 | 14 | 26 | 20,0 | 0,00 |
| 18/07 | 17 | 28 | 22,5 | 0,00 |
| 19/07 | 18 | 30 | 24,0 | 7,00 |
| 20/07 | 17 | 30 | 23,5 | 0,00 |
| 21/07 | keine Daten | keine Daten | - | keine Daten |
| 22/07 | 13 | 27 | 20,0 | 0,00 |
| 23/07 | 16 | 30 | 23,0 | 0,00 |
| 24/07 | 14 | 31 | 22,5 | 0,00 |
| 25/07 | 14 | 30 | 22,0 | 0,00 |
| 26/07 | 17 | 28 | 22,5 | 0,25 |
| 27/07 | 17 | 31 | 24,0 | 0,00 |
| 28/07 | 19 | 33 | 26,0 | 0,25 |
| 29/07 | 19 | 36 | 27,5 | 0,00 |
| 30/07 | 22 | 37 | 29,5 | 0,25 |
| 31/07 | 15 | 27 | 21,0 | 31,00 |

| Datum | Minimaltemp. (°C) | Maximaltemp. (°C) | Durchschnittstemp. (°C) | Niederschlag (mm) |
|---|---|---|---|---|
| 01/08 | 17 | 29 | 23,0 | 0,00 |
| 02/08 | 16 | 28 | 22,0 | 0,00 |
| 03/08 | 17 | 32 | 24,5 | 0,00 |
| 04/08 | 18 | 34 | 26,0 | 0,00 |
| 05/08 | 20 | 32 | 26,0 | 0,00 |
| 06/08 | 18 | 33 | 25,5 | 0,00 |
| 07/08 | 20 | 34 | 27,0 | 0,00 |
| 08/08 | 19 | 35 | 27,0 | 0,00 |
| 09/08 | 19 | 36 | 27,5 | 0,00 |
| 10/08 | 22 | 36 | 29,0 | 0,25 |
| 11/08 | 17 | 30 | 23,5 | 1.00 |
| 12/08 | 14 | 28 | 21,0 | 0,00 |
| 13/08 | 14 | 29 | 21,5 | 0,00 |
| 14/08 | 16 | 32 | 24.0 | 1,00 |
| 15/08 | 13 | 24 | 18,5 | 1,00 |
| 16/08 | 12 | 26 | 19,0 | 0,00 |
| 17/08 | 12 | 27 | 19,5 | 0,00 |
| 13/08 | 13 | 29 | 21,0 | 0,00 |
| 19/08 | 14 | 32 | 23,0 | 0,00 |
| 20/08 | 16 | 33 | 24,5 | 0.00 |
| 21/08 | 18 | 33 | 25,5 | 0,25 |
| 22/08 | 13 | 24 | 18,5 | 0,25 |
| 23/08 | 13 | 26 | 19,5 | 0,00 |
| 24/08 | 15 | 27 | 21,0 | 0,00 |
| 25/08 | 13 | 26 | 19,5 | 0,00 |
| 26108 | 15 | 27 | 21,0 | 4,00 |
| 27/08 | 14 | 21 | 17,5 | 7,00 |
| 28/08 | 13 | 22 | 17,5 | 0,00 |
| 29/08 | 17 | 22 | 19,5 | 0,25 |
| 30/08 | 13 | 22 | 17,5 | 0,25 |
| 31/08 | 11 | 24 | 17,5 | 0,25 |

| Datum | Minimaltemp. (°C) | Maximaltemp. (°C) | Durchschnittstemp. (°C) | Niederschlag (mm) |
|---|---|---|---|---|
| 01/09 | 15 | 26 | 20,5 | 0,00 |
| 02/09 | 13 | 23 | 18,0 | 4,00 |
| 03/09 | 16 | 22 | 19,6 | 0,00 |
| 04/09 | 9 | 25 | 17,0 | 0,00 |
| 05/09 | 9 | 25 | 17,0 | 0,00 |
| 06/09 | 11 | 25 | 18,0 | 0,00 |
| 07/09 | 8 | 23 | 15,5 | 0,00 |
| 08/09 | 9 | 26 | 17,5 | 0,00 |
| 09/09 | 9 | 26 | 17,5 | 0,00 |
| 10/09 | 10 | 20 | 15,0 | 1,00 |
| 11/09 | 13 | 22 | 17,5 | 1,00 |
| 12/09 | 13 | 19 | 16,0 | 0,25 |
| 13/09 | 10 | 20 | 15,0 | 0,25 |
| 14/09 | 6 | 20 | 13,0 | 1,00 |
| 15/09 | 6 | 15 | 10,5 | 2.00 |
| 16/09 | 12 | 22 | 17,0 | 0,00 |
| 17/09 | 14 | 24 | 19,0 | 2.00 |
| 18/09 | 8 | 16 | 12,0 | 9.00 |
| 19/09 | 11 | 18 | 14,5 | 0,00 |
| 20/09 | 5 | 16 | 10,5 | 15,00 |
| 21/09 | 10 | 19 | 14,5 | 0,00 |
| 22/09 | 7 | 19 | 13,0 | 0,25 |
| 23/09 | 9 | 19 | 14,0 | 0.00 |
| 24/09 | 12 | 22 | 17,0 | 0,00 |
| 25/09 | 11 | 21 | 16,0 | 0,00 |
| 26/09 | 10 | 17 | 13.5 | 0,00 |
| 27/09 | 9 | 21 | 15,0 | 0,25 |
| 28/09 | 3 | 15 | 9,0 | 0,00 |
| 29/09 | 4 | 16 | 10,0 | 0,00 |
| 30/09 | 6 | 17 | 11,5 | 0,00 |

## Patentansprüche

1. Verfahren zum Ausführen der Verwirrmethode bei dem ein Träger, der mit wenigstens einem Pheromon beladen ist, ausgebracht wird, **dadurch gekennzeichnet, dass** der mit Pheromon beladene Träger in einer Mischung mit Wasser durch Sprühen ausgebracht wird und dass der mit Pheromon beladene Träger gemeinsam mit einem Netz- und Haftmittel versprüht wird.

2. Verfahren nach Anspruch 1, **dadurch gekennzeichnet, dass** als Träger Zeolith in Pulverform verwendet wird.

3. Verfahren nach Anspruch 1, **dadurch gekennzeichnet, dass** als Träger Zeolith in Granulatform verwendet wird.

4. Verfahren nach einem der Ansprüche 1 bis 3, **dadurch gekennzeichnet, dass** ein Träger, insbesondere Zeolith, verwendet wird, der mit 10 bis 50 g, insbesondere 20 g bis 40 g Pheromon je kg Träger beladen ist.

5. Verfahren nach einem der Ansprüche 1 bis 4, **dadurch gekennzeichnet, dass** als Sexualpheromon wenigstens eines ausgewählt aus der Gruppe, bestehend aus (E,Z)-7,9-Dodecadienylacetat und (Z)-9-Dodecenylacetat verwendet wird.

6. Verfahren nach einem der Ansprüche 1 bis 5, **dadurch gekennzeichnet, dass** 1 bis 15 g, insbesondere 5 bis 10 g, Pheromon je Hektar verwendet wird.

7. Verfahren nach einem der Ansprüche 1 bis 6, **dadurch gekennzeichnet**, das als Netz- und Haftmittel ein Mittel enthaltend wenigstens eine oberflächenaktive Substanz verwendet wird.

8. Verfahren nach Anspruch 7, **dadurch gekennzeichnet, dass** als Netz- und Haftmittel ein Mittel enthaltend beispielsweise Dioctyl-Natrium-Sulfosuccinat, Polyethylenglykol-octylphenyläther und Isopropanol, verwendet wird.

## Claims

1. Method for implementing mating disruption in which a support loaded with at least one pheromone is dispensed, **characterized in that** the pheromone-loaded support is dispensed by spraying in a mixture with water and the pheromone-loaded support is sprayed together with a wetting agent and sticking agent.

2. Method according to claim 1, **characterized in that** zeolite in powdered form is used as the support.

3. Method according to claim 1, **characterized in that** zeolite in granular form is used as the support.

4. Method according to any one of claims 1 to 3, **characterized in that** a support, in particular a zeolite, loaded with 10 g to 50 g, in particular 20 g to 40 g pheromone per kg support is used.

5. Method according to any one of claims 1 to 4, **characterized in that** at least one pheromone from the group consisting of (E, Z)-7,9-dodecadienyl acetate and (Z)-9-dodecenyl acetate is used as the sex pheromone.

6. Method according to any one of claims 1 to 5, **characterized in that** 1 g to 15 g, in particular 5 g to 10 g pheromone is used per hectare.

7. Method according to any one of claims 1 to 6, **characterized in that** an agent containing at least one surface-active substance is used as the wetting agent and sticking agent.

8. Method according to claim 7, **characterized in that** an agent containing dioctyl sodium sulfosuccinate, polyethylene glycol octylphenyl ether and isopropanol, for example, is used as the wetting agent and sticking agent.

## Revendications

1. Procédé destiné à réaliser la méthode de confusion sexuelle, lors de laquelle on extrait un porteur qui est chargé avec au moins un phéromone, **caractérisé en ce qu'**on extrait par aspersion le porteur chargé de phéromone dans un mélange avec de l'eau et **en ce qu'**on vaporise le porteur chargé de phéromone en commun avec un agent mouillant ou un agent adhésif.

2. Procédé selon la revendication 1, **caractérisé en ce que** en tant que porteur, on utilise de la zéolithe sous forme pulvérulente.

3. Procédé selon la revendication 1, **caractérisé en ce que** en tant que porteur, on utilise de la zéolithe sous forme de granulés.

4. Procédé selon l'une quelconque des revendications 1 à 3, **caractérisé en ce qu'**on utilise un porteur, notamment de la zéolithe qui est chargé avec de 10 g à 50 g, notamment de 20 g à 40 g de phéromone par kg du porteur.

5. Procédé selon l'une quelconque des revendications 1 à 4, **caractérisé en ce qu'**on utilise en tant que phéromone sexuel au moins l'un choisi dans le groupe constitué du (E, Z)-7,9-dodécadienylacétate et du (Z)-9-dodécénylacétate.

6. Procédé selon l'une quelconque des revendications 1 à 5, **caractérisé en ce qu'**on utilise de 1 à 15 g, notamment de 5 à 10 g de phéromone par hectare.

7. Procédé selon l'une quelconque des revendications 1 à 6, **caractérisé en ce qu'**en tant qu'agent mouillant ou agent adhésif, on utilise un produit contenant au moins une substance tensio-active.

8. Procédé selon la revendication 7, **caractérisé en ce qu'**en tant qu'agent mouillant ou agent adhésif, on utilise un produit contenant par exemple du dioctyle sulfosuccinate de sodium, de l'octylphényléther de polyéthylène glycol et de l'isopropanol.
